Europäisches Patentamt

European Patent Office

Office européen des brevets

(19)

(11) Publication number: **0 150 964
B1**

(12) EUROPEAN PATENT SPECIFICATION

(45) Date of publication of patent specification: 03.06.87

(51) Int. Cl.⁴: **B 60 D 1/22,** F 16 F 7/04

(21) Application number: 85300374.7

(22) Date of filing: 21.01.85

(54) Damping rotary motion.

(30) Priority: 31.01.84 GB 8402478
17.04.84 GB 8409926

(43) Date of publication of application:
07.08.85 Bulletin 85/32

(45) Publication of the grant of the patent:
03.06.87 Bulletin 87/23

(84) Designated Contracting States:
AT BE CH DE FR GB IT LI LU NL SE

(56) References cited:
FR-A- 629 116
GB-A- 212 113
GB-A- 1 544 210
US-A- 3 502 351
US-A- 3 785 680
US-A- 3 825 282

(73) Proprietor: Wilmar Engineering Limited
Craigshaw Road West Tullos Industrial Estate
Aberdeen AB1 4AR Scotland (GB)

(72) Inventor: Anderson, William
"Sunnybrae" Banchory Devenick
Aberdeen ABI 5YJ Scotland (GB)

(74) Representative: Stokes, Graeme Wilson et al
c/o Cruikshank & Fairweather
19 Royal Exchange Square
Glasgow G1 3AE Scotland (GB)

## Description

This invention relates to a device for damping rotary motion by friction.

The invention is particularly concerned with such a device in the form of an anti-snaking stabiliser for a motor vehicle/trailer, e.g. car/caravan, combination.

A known anti-snake stabiliser consists of two lever arms mutually interconnected by a pivot assembly incorporating friction plates interleaved with annular friction pads all being axially loaded by means of a clamp bolt which also defines the pivot axis. In use, one of the lever arms is anchored to the towing vehicle adjacent the towing bracket, while the other arm extends rearwardly and is located in a guide shoe on the trailer or caravan so as to provide resistance to lateral swinging of the trailer or caravan.

The degree of said resistance to lateral swinging is determined by the axial loading of the pivot assembly. A disadvantage of a known stabiliser is the absence of means incorporated in the device for indicating when the axial loading is set at or near to a recommended value. If the loading is "factory set" (i.e. by the manufacturer or a service agent/specialist) and the device is supplied to a user with a recommendation not to tamper with the setting, then the user is subject to a handling difficulty attributable to the pivotal stiffness whilst fitting the device to a vehicle/trailer combination. If the user slackens the axial loading to facilitate fitting of the device, or if the setting is suspect due to wear, then the absence of an indicating means as mentioned above leaves the user with a need for an additional appliance such as a torque wrench and/or a need for additional technical knowledge in order to reset the axial loading correctly.

In French Patent Specification No. 629 116 which is concerned with a similar friction shock-absorber for an automobile suspension, it is proposed to obtain a standard initial setting of axial loading by means of a yieldable engagement between a springy index member secured to a clamp-bolt nut and a graduated setting washer which is free to rotate around the clamp-bolt, the setting washer having a ramped projection by which the setting washer is turned by the index member until axial friction between the setting washer and the body of the shock absorber is sufficient to stop the setting washer and result in the index member yielding and riding over the ramped projection to align immediately with a graduation marked "standard", or equivalent. Thus, the springy index member in combination with the ramped projection together constitute a torque-limiting means arranged between the screwed nut and the setting washer. The operation of this arrangement is influenced by friction force acting on the setting washer. This friction force in turn is influenced by the condition of the whole device which condition may be anything between wet/dry, clean/oily and so on thereby making the "standard" axial loading value uncertain.

An object of the present invention is to provide a device for damping rotational motion by friction, wherein the aforesaid disadvantage is obviated or mitigated.

With regard to FR—A—629116 from which there is known a device for damping rotary motion by friction, comprising a pivot assembly incorporating friction plates interleaved with annular friction pads all arranged for axial loading by means of mutually adjustable screw-threaded elements defining the pivot axis of said assembly, one of said screw-threaded elements, being located or fixed against rotation relative to one of or one set of the friction plates, the other of said screw-threaded elements having a first index mark or pointer, and an indicator disc is provided coaxial with the said pivot axis and rotatable relative to both said screw-threaded elements and arranged adjacent said other of the screw-threaded elements for selective alignment of said index mark or pointer with one or more indicator marks on the indicator disc, the present invention is characterized in that the said index mark or pointer is on a setting member adapted and arranged for turning the said other screw-threaded element up to a pre-determined relatively small torque value, the setting member incorporates torque-limiting means engaging the said other screw-threaded element.

An embodiment of the present invention will now be described by way of example with reference to the accompanying drawings in which:—

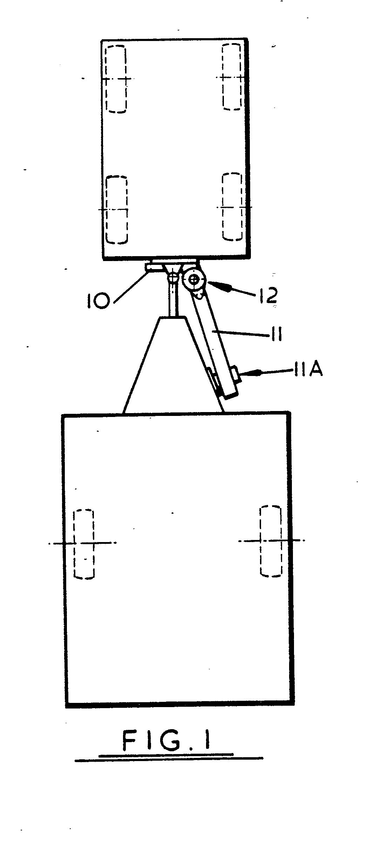

Figure 1 is a diagrammatic plan view of a vehicle/trailer combination including an anti-snaking stabiliser;

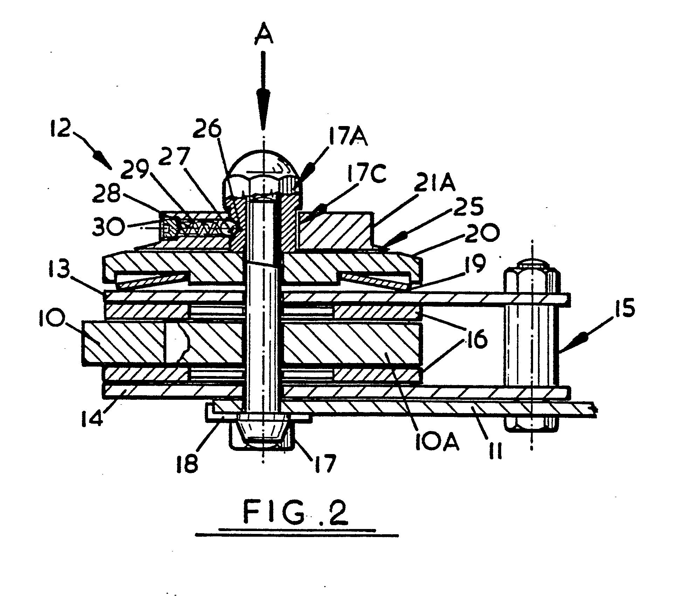

Figure 2 is a sectional elevation showing parts of an anti-snaking stabiliser in accordancae with the present invention; and

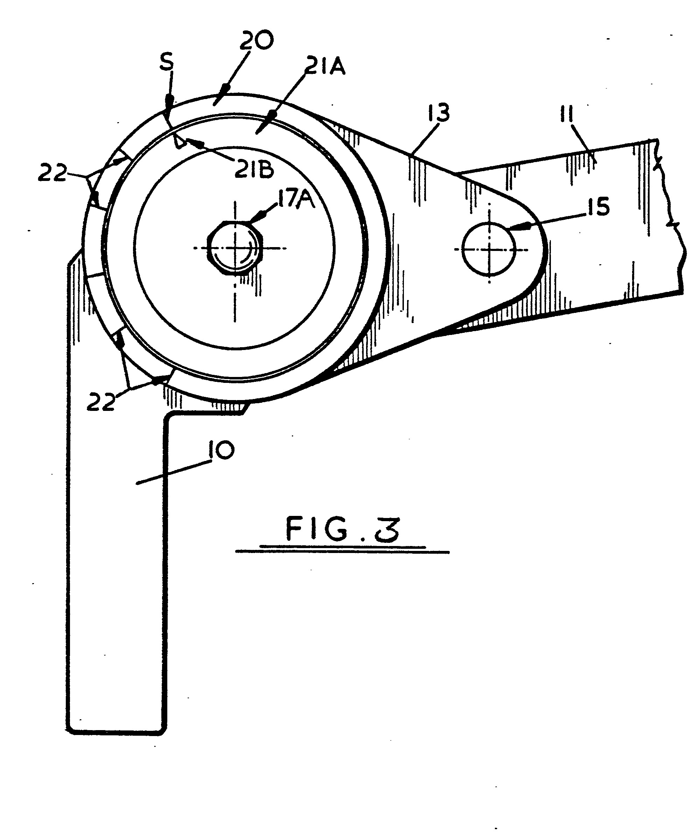

Figure 3 is a plan view in the direction of arrow A in Figure 2.

In the drawings, the anti-snaking stabiliser consists of two lever arms 10 and 11 respectively which are mutually interconnected by a pivot assembly indicated generally by reference numeral 12. One of the lever arms (10) is adapted in known manner for securing or anchoring to a towing vehicle adjacent the towing bracket, and the other arm (11), preferably in the form of a blade spring, extends rearwardly for location in a guide shoe 11A mounted on the trailer or caravan. The arrangement is such that, in use, lateral swinging on snaking of the trailer or caravan relative to the towing vehicle about the pivot axis of the pivot assembly 12 is inhibited by frictional damping in the pivot assembly.

During fitting of the stabilising device to a vehicle/trailer combination, the lever arm 10 is first secured to the vehicle, and then the arm 11 is swung into engagement with the guide shoe 11A as aforementioned. It is this moving of the arm 11 which can be difficult and even hazardous if the operation is attempted with the pivot assembly exerting its full frictional effect.

The lever arm 10 terminates in a disc shaped portion so defining a centre friction plate 10A of the pivot assembly 12. Respectively above and below the centre plate 10A, there are positioned two further friction plates 13 and 14 mutually interconnected by a tie bolt and spacer assembly indicated generally by reference numeral 15. The friction plates 10A, 13 and 14 are interleaved with annular friction pads 16 and the assembly pivots on a pivot axis defined by mutually adjustable screw-threaded elements in the form of a clamp bolt 17 and cooperating adjuster nut 17A. The bolt 17 is located rotationally, with respect to the arm 11 and the friction plates 13 and 14, by means of a tab washer 18 tabs of which are folded to engage the adjacent bolt head and an end face of the arm 11.

Between the adjuster nut 17A and the friction plate 13 there is disposed a spring means in the form of a belville spring (disc spring) 19 and an indicator disc 20 these items being arranged coaxial with the pivot axis. The belville spring 19 serves as a means of storing axial loading force in the pivot assembly.

The indicator disc 20, which is rotatable relative to both the bolt 17 and the adjuster nut 17A, carries indicator marks 22 which are disposed around the periphery of the indicator disc. Between the adjuster nut 17A and the disc 20 there is provided a setting member 21A having an index mark 21B which is carried on a lower flange portion 25 of the setting member 21A. A central bore of the setting member 21A receives a cylindrical detent barrel 17C which is formed as an integral part of the nut 17A and extends freely through the setting member 21A to bear on the indicator disc 20 without clamping the setting member. The detent barrel 17C is provided with a detent recess in the form of a conical depression 26 which is releasably engaged by a detent ball 27 under the influence of a compression spring 28 retained in a radial passage 29 in the setting member 21A by means of a screw plug 30. Tension in the spring 28 may be varied by radial adjustment of the screw plug 30. Thus, the setting member 21A may be rotated relative to the nut 17A by turning involving a torque value determined by the setting of the spring 28 which together with the ball 27 and the detent recess 26 constitute a torque-limiting means.

Operation of the stabiliser is as follows. In order to facilitate engagement of the lever arm 11 with the guide shoe 11A, the adjuster nut 17A is slackened by turning anti-clockwise until axial loading of the pivot assembly 12 is zero. Next, the setting member 21A is manually rotated clockwise to tighten the adjuster nut, rotation being continued until clicking of the detent ball 27 into the detent recess 26 is noticed. The occurrence of this click means that, one turn previously, the torque-limiting means has applied a predetermined torque value to the nut 17A substantially independent of any variable friction forces whereafter the setting member 21A has "idled" for the remainder of the turn at the end of which the detent ball 27 is returned to the detent recess 26. When this predetermined relatively small torque value has been applied to the nut 17A, the indicator disc 20 is set by hand so that the index mark 21B is aligned with a first-setting indicator mark S on the indicator disc 20. Now, the arm 11 may easily be swung into its required position. Thereafter, in order to reset the axial loading of the pivot assembly 12, a spanner is used further to tighten the nut 17A, which must rotate together with the setting member 21A, to bring the index 21B into alignment with a selected one of the index marks 22 according to a desired axial loading in the assembly 12.

Further modifications within the scope of the present invention include inversion of the bolt and adjuster nut arrangement; that is to say that the detent barrel 17C may be attached to the bolt head and the nut located on the underside of the pivot assembly. It is envisaged that the arrangements for indicating axial loading of the pivot assembly as above described may be applicable other than in the context of an anti-snaking stabiliser. Thus, a device in accordance with the present invention may find use in any context where setting of the axial loading in a frictional pivot assembly is to be effected easily and at moderate cost.

**Claims**

1. A device for damping rotary motion by friction, comprising a pivot assembly (12) incorporating friction plates (10A, 13, 14) interleaved with annular friction pads (16) all arranged for axial loading by means of mutually adjustable screw-threaded elements (17, 17A) defining the pivot axis of said assembly, one of said screw-threaded elements (17) being located or fixed against rotation relative to one of or one set of the friction plates, the other of said screw-threaded elements (17A), having a first index marks or pointer (21B), and an indicator disc (20) is provided coaxial with the said pivot axis and rotatable relative to both said screw-threaded elements and arranged adjacent said other (17A) of the screw-threaded elements for selective alignment of said index mark or pointer with one or more indicator marks (22) on the indicator disc (20); characterized in that the said index mark or pointer (21B) is on a setting member (21A) adapted and arranged for turning the said other screw-threaded element (17A) up to a predetermined relatively small torque value, and the setting member (21A) incorporates torque-limiting means (26, 27, 28) engaging the said other screw-threaded element (17A).

2. A device as claimed in Claim 1; characterized in that the torque-limiting means (26, 27, 28) comprises a conical recess (26) in the screw-threaded element (17A), and a detent ball (27) releasably engaging said recess (26) under the influence of a compression spring (28) disposed in a radial passage (29) in the setting member (21A).

3. A device as claimed in Claim 2; characterized by a screw plug (30) in the passage (29) for varying the compression force of the spring (28).

4. A device as claimed in any one of the preceding claims; characterized in that the pivot assembly (12) incorporates a spring means (19) for storing axial loading force.

## Patentansprüche

1. Vorrichtung zum Dämpfen einer Drehbewegung mittels Reibung, bestehend aus einem Schwenkaufbau (12) mit Friktionsplatten (10A, 13, 14) und dazwischen angeordneten ringförmigen Friktionsklötzen (16), die sämtlich mittels gegenseitig einstellbarer, die Schwenkachse dieser Aufbaus bestimmender Schraubgewindeelemente (17, 17A) axial belastbar sind, wobei das eine dieser Schraubgewindeelemente (17) gegenüber einer bzw. einem Satz der Friktionsplatten drehfest angeordnet ist und das andere (17A) erste Einstellmarken oder einen Zeiger (21B) aufweist, und wobei eine mit jener Schwenkachse koaxiale und gegenüber beiden solchen Schraubgewindeelementen drehbare, neben jenem anderen (17A) von diesen angeordnete Anzeigerscheibe (20) zum wahlweisen Ausrichten der besagten Einstellmarke bzw. des Zeigers auf eine oder mehrere Anzeigemarken (22) auf der Anzeigerscheibe (20) vorgesehen ist, dadurch gekennzeichnet, dass sich diese Einstellmarke bzw. der Zeiger (21B) auf einem Einstellglied (21A) befindet, das zum Verdrehen jenes anderen Schraubgewindeelements (17A) bis zu einem vorbestimmten, verhältnismässig kleinen Drehmomentwert ausgebildet und angeordnet ist, und dass an jenem anderen Schraubgewindeelement (17A) angreifende, drehmomentbegrenzende Mittel (26, 27, 28) im Einstellglied (21A) eingebaut sind.

2. Vorrichtung nach Anspruch 1, dadurch gekennzeichnet, dass die Drehmomentbegrenzenden Mittel (26, 27, 28) aus einer konischen Ausnehmung (26) im Schraubgewindeelement (17A) und einer unter der Einwirkung einer in einem radialen Durchgang (29) im Einstellglied (21A) angeordneten Druckfeder (28) lösbar in dieser Ausnehmung (26) eingreifenden Rastkugel (27) bestehen.

3. Vorrichtung nach Anspruch 2, gekennzeichnet, durch einen Schraubstift (30) im Durchgang (29) zur Veränderung der Druckkraft der Feder (28).

4. Vorrichtung nach einem der vorhergehenden Ansprüche, dadurch gekennzeichnet, dass der Schwenkaufbau (12) eine Federvorrichtung (19) zur Aufnahme axialer Lastkräfte enthält.

## Revendications

1. Dispositif pour amortir un mouvement rotatif par friction comprenant un ensemble pivotant (12) comportant des plaques de friction (10A, 13, 14) disposées en alternance avec des patins de friction annulaires (16), le tout étant agencé pour une mise en charge axiale au moyen d'éléments filetés (17, 17A) réglables l'un par rapport à l'autre qui définissent l'axe de pivotement dudit ensemble, un desdits éléments filetés (17) étant situé ou fixé contre la rotation par rapport à une ou à un jei des plaques de friction, l'autre desdits éléments filetés (17A), ayant un premier trait d'indication ou une aiguille (21B), et où il est prévu un disque indicateur (20) coaxial audit axe de pivotement et pouvant tourner par rapport auxdits deux éléments filetés et disposé au voisinage dudit autre (17A) des éléments filetés en vue d'un alignement sélectif dudit trait d'indication ou aiguille avec une ou plusieurs graduations (22) sur le disque indicateur (20), caractérisé en ce que ledit trait d'indication ou aiguille (21B) se trouve sur un organe de réglage (21A) apte à et disposé pour faire tourner ledit autre élément fileté (17A) jusqu'à une valeur de couple prédéterminée relativement basse, et l'organe de réglage (21A) comporte des moyens (26, 27, 28) de limitation du couple, attaquant ledit autre élément fileté (17A).

2. Dispositif suivant la revendication 1, caractérisé en ce que les moyens (26, 27, 28) de limitation du couple comprennant une cavité conique (26) dans l'élément fileté (17A), et une bille de détente (27) s'engageant dans ladite cavité (26) sous l'action d'un ressort comprimée (28) disposé dans un passage radial (29) ménagé dans l'organe de réglage (21A).

3. Dispositif suivant la revendication 2, caractérisé par un bouchon (30) à visser dans le passage (29) pour modifier l'effort de compression exercé par le ressort (28).

4. Dispositif suivant l'une ou l'autre des revendications précédentes, caractérisé en ce que l'ensemble pivotant (12) comprend des moyens à ressort (19) pour emmagasiner l'effort de charge axiale.

FIG. 1

FIG.2

FIG.3